# EUROPEAN PATENT SPECIFICATION

(11) **EP 1 454 484 B1**
(45) Date of publication and mention of the grant of the patent: **19.07.2006**
(21) Application number: 02780597.7
(22) Date of filing: 08.11.2002
(51) Int. Cl.: H04N 5/76

(54) **VIDEO RECORDING SYSTEM AND METHOD FOR A PLURALITY OF INDIVIDUAL USERS AND CATEGORIES OF USERS**
VIDEOAUFZEICHNUNGSSYSTEM UND -VERFAHREN FÜR MEHRERE BENUTZER UND BENUTZERKATEGORIEN
SYSTEME ET PROCEDE D'ENREGISTREMENT VIDEO POUR UNE PLURALITE D'UTILISATEURS INDIVIDUELS ET POUR DES CATEGORIES D'UTILISATEURS

(30) Priority: 10.11.2001 US 337565 P
(43) Date of publication of application: 08.09.2004
(73) Proprietor: Thomson Licensing, 92100 Boulogne-Billancourt (FR)
(72) Inventor: BOYCE, MAC DONALD, Jill, Manalapan, NJ 07726 (US); COOPER, Jeffrey, Allen, Rocky Hill, NJ 08553 (US)
(74) Representative: Benezeth, Philippe J.L. M.
(86) International application number: PCT/US2002/035958
(87) International publication number: WO 2003/043321

(56) References cited:
- GB-A- 2 346 251

## Description

This invention relates to an apparatus and methods for recording video content and controlling access to recorded video content, and in particular, to an apparatus and methods for recording video content and controlling access to recorded video content for a plurality of users and categories of users.

Personal video recorders (PVR) are devices that allow a user to select, by means of a graphical user interface (GUI) displayed on an associated television set, monitor, or other display, a television program to be broadcast at a future time or which is currently being broadcast, digitally "record" the selected program onto a storage module, such as a hard disk, and upon user command "playback" the stored program by retrieving it from storage, decompressing or decoding the program and outputting it to an associated television set or other display device. Devices having such capability are currently sold under the trademarks "TiVo," "RePlayTV," "Sky +," and "Showstopper."

Parental control systems and methods available on certain television sets use ratings information, contained in the video blanking interval (VBI) of broadcast television programs, or transmitted in the program guide, to prevent certain users, especially children, from viewing programs with ratings not permitted by the parent or supervisor who controls the system. For example, the parent may want to block his or her children from viewing programs that have certain sexual content ratings and/or violence content ratings. In that case, a child who is logged into the television set is blocked from viewing such programs. In other television systems, the parent may block viewing of all programs with certain ratings categories unless a password is provided to unlock the display of such programs.

GB-A-2 346 251 discloses a video recording system that allows for multiple user identities. A master user menu is used to add new users and user profiles to the system. The profiles may include restrictions for controlling the amount and type of programs selected by each user in the system. The system allows each user to respectively select programs to be recorded in accordance with their associated user profile and display a play list of all of the programs that are stored and available for that user.

While a typical personal video recorder may record the ratings information along with the programs being recorded so that television sets with parental control systems can be used to prevent an program having sexual or violent content from being viewed by unauthorized viewers, some parents do not agree with the ratings information supplied by the broadcaster. In other households, parents may wish to control the viewing of their children on a program by program basis, which may be difficult to manage with existing systems in which only one level of parental control is allowed, i.e., either all programs can be watched, or only those which fall into a certain ratings category. Under parental control systems used in conventional television sets, a child may be blocked from viewing a program due to its rating information but a parent may override the blocking of a particular program to allow the child to watch on a program by program basis.

Another problem with existing systems is there is no way to associate selected recording with selected users. For example, a user may want to record a certain program for viewing by selected number of users, rather than all other users. For example, the mother may want to record a fashion show for viewing by her daughters, but not her sons or her husband. In view of the above, a need has arisen for a system that allows one user to select a television program for recording and at the same time select which other users may view the recorded program.

A still further problem with current PVR systems is that programs may be automatically deleted according to a default order when space is required for additional recording. For example, recorded programs may be automatically deleted in the order that they were recorded, i.e., the oldest recordings are deleted first. A user can override the default order by identifying a particular program and designating it to be saved until a particular date. In cases where more than one user wishes to view a recorded program, present systems do not distinguish whether certain interested viewers have completed viewing the program, and as such; there is no way to delete the program based on whether all interested users have completed the viewing. Therefore, some programs are deleted according to the default order before all users who are interested in them have had a chance to view them.

An additional problem with current PVRs is that since the entire list of recorded programs appears on a single list, each viewer must scroll through all of the programs currently stored on the list rather than only those in which that user is interested.

These problems, and others as will become apparent from the present description, are addressed by the present invention as set out in claims 1 and 10, which comprises, in one aspect, an improved video recording apparatus, which establishes a plurality of user identities, or names, and allows the users to customize the recording of programs to designated user identities, uniquely associates a specific recorded programs list for each user identity, and presents the associated recorded list to each one of the respective user identities. In an exemplary embodiment, the present apparatus allows a first user to log in and select a television program for recording, wherein after the selected program is recorded a list of available programs can be displayed which includes only the programs selected for recording by the logged in user and excludes programs selected for recording by other users. In another embodiment, the first user can designate one or more other users or group names, which include a subset of all of the users, for viewing a selected program, wherein when one of the designated other users, or member of a designated group, logs in, a list of programs designated for that user, or group, as well as the programs recorded by the logged in user is displayed and can be played back by that user. In the case of parental controls based on rating systems wherein ratings are contained in a portion of the broadcast such as the video blanking interval (VBI), or in a program guide, when a supervisor such as a parent designates another user, the program is listed in the designated user's list of available programs after logging in, and that designated user has permission to view the program, superceding limitations imposed by the parental control system.

The PVR system according to the present invention comprises a storage space, such as a hard disk, where the video programs can be recorded and identifications of a plurality of users can also be stored. The PVR system generates a graphical user interface (GUI) that can be displayed on a television set, a monitor, or the like, and allows each potential user of the PVR recording or playback system to be identified, characteristics of each or certain users such as age to be entered, and passwords for some or all users to be established. A first user who has logged in using the GUI can select a television program to be recorded in any of the conventional ways, and according to the invention and in the aforementioned preferred embodiment can also designate one or more other users to watch the selected program. After the television program has been recorded, when another user logs in and requests a display of recorded programs using the GUI, that selected program is included in or excluded from that other user's list, depending on whether the first user selected that other user to view the selected program. Alternatively all of the stored programs, including the selected program, can be included when the subsequent user displays the list, but viewing of that program can be blocked if the first user did not give viewing permission to that subsequent user. Other schemes for permitting or denying a subsequent user from viewing a program recorded by a prior user are possible. A password scheme may be used in some embodiments, but may not be used in other embodiments. In some households where there are no children and parental control is not used, for example, a user identification scheme without passwords, e.g., just the users' nicknames, can be used.

The inventive PVR preferably also stores data regarding which of the permitted users have viewed the selected television program, and the portion of the program viewed by a permitted viewer if the program has been partially viewed. When all the permitted users of the selected television program have-completely viewed the program, the PVR can be set to automatically delete it, which some users will find more convenient than being prompted to ask for permission to delete. When there is not enough storage space to record a new program which has been scheduled for recording, there are several possible deletion protocols which can be programmed as defaults or selected by the users. For example, the system may request user instructions to delete any program or it may use an automatic deletion order based on the number of permitted users which have viewed a stored program, or based on how recently the recorded program was viewed by any permitted user. Ratings system categories of stored programs can be used so that children's programs can be deleted first, or last, depending on preset user preferences for deletion order. Deletion order can even be based on a combined rating generated by whether the program received a positive review or negative review, known in the art as "thumbs up" or "thumbs down" selections, from the users who viewed the program.

The term PVR as used herein refers to any video recording apparatus that is capable of receiving a video signal, recording the signal to a storage device in digital format, retrieving the signal from the storage device in a random access manner, formatting the retrieved signal for display, and providing the formatted signal to a display device. Although a hard disk is used in the exemplary embodiments described below, it is to be understood that any storage device for storing digital video data may be used in the present PVR, including, but not limited to, optical media and solid state memories.

The invention is described herein with reference to the following drawings, wherein:
**FIG. 1-is** a schematic of a video recording apparatus according to the invention;
**FIG. 2** is a flow chart of an embodiment of a method according to the invention; and
**FIG. 3** illustrates graphic user interfaces for implementing an embodiment of the invention.

Many households have multiple family members who use the same Personal Video Recoder (PVR), for recording television programs, such as those made by TiVo, and computer based PVRs. In some cases, multiple people want to watch the same recorded programs, but have different schedules -and watch the same programs at different times. Also in some cases, viewers want to watch different programs, and want to more easily select only those programs that are of interest to that individual viewer. This invention provides means to easily manage PVR viewing of programs by more than one viewer.

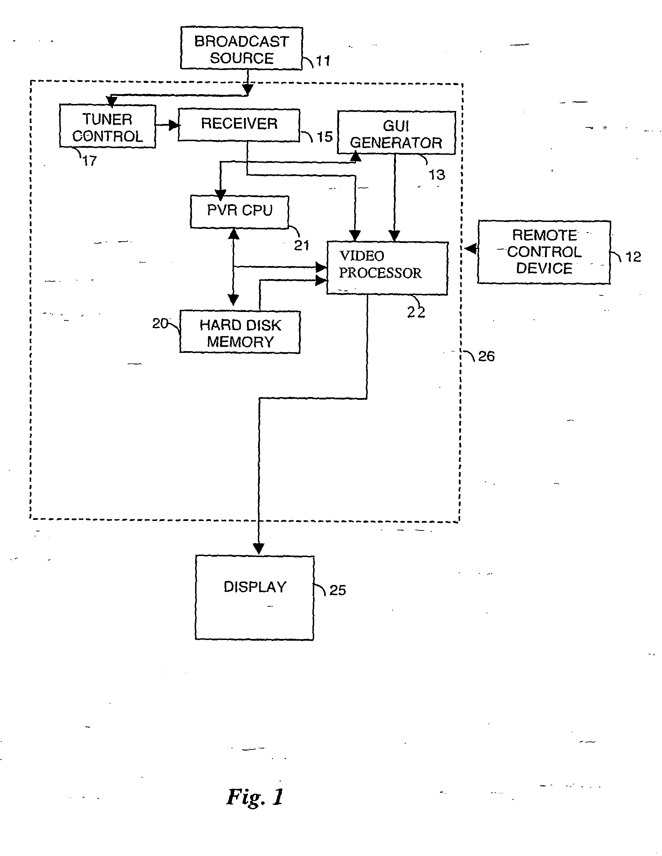

Referring to FIG. 1, an exemplary embodiment of a personal video recorder (PVR) 26 according to the present invention is illustrated wherein an outside broadcast source 11 such as terrestrial TV, digital terrestrial TV, analog cable TV, digital satellite, digital cable, DSL, cable modem, MMDS, or the like is connected to the PVR 26 which tunes the signal from the source with tuner control 17 and receiver 15. The received signal is processed and formatted for display on display 25 by video processor 22. A television program is received at a certain time on a certain channel for a certain time period as controlled by PVR CPU 21 based on program selection data, which was received from one of the users, and may be stored in a memory within CPU 21 or in memory 20. Memory 20 is in the form of a hard disk, however, any storage media suitable for storing a large amount of digital video data, such as optical disks, may be used.

An image generator 13 generates graphic user interface GUI screens under the control of PVR CPU 21 to display various operating modes of PVR 26, and to allow the user to enter various commands to control PVR 26. The images generated by image generator 13 is combined with the video images in video processor 22 and output to display device 25 such as a television display, computer monitor, etc. Image generator 13 may be incorporated into PVR CPU 21.

The user uses the remote control device 12 to transmit commands to control the various operating modes of PVR 26, such as: logging in to a particular user identity, selecting television programs to be recorded from an electronic program guide (EPG) for display on the TV monitor 25, and selecting a future television program to be "recorded," which is computed by the CPU 21 for a time period and channel at which the tuner control 17 will control the receiver 15 to receive a program from a broadcast source 11. The user also uses the remote control 12 in response to GUI screens, as will be discussed in more detail below, to designate other users for viewing the program. The CPU 21 processes the user's selection of programs to be recorded and designations of other users to view the selected program. The user can designate additional other users to allow the additional other user to view the recorded programs at any time, even after that user has viewed the stored program. The structure of the various elements mentioned above are known to those skilled in the art and will not be discussed in further detail. The operation and control of the inventive PVR for implementing the present invention are now described.

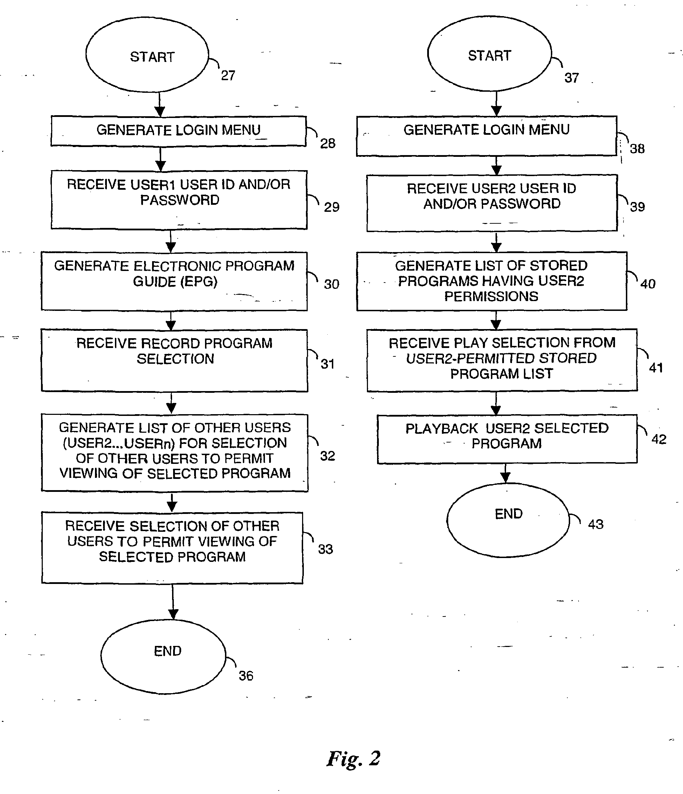

Referring now to FIG. 2, a flow chart showing an embodiment of the process is illustrated as starting at 27, wherein the PVR 26 generates 28 a login menu in which a user, USER₁ in this example, uses the remote controller 12 (Fig. 1) to either select his user name, his password or both user name and password, which are received 29 and accepted by the PVR 26 to login USER₁. The user identities are processed and managed by PVR CPU 21 and stored in a memory device within CPU 21 or in memory 20. USER₁ may wish to see the electronic program guide, in which case USER₁ selects the EPG and the PVR 26 generates 30 the EPG so that USER₁ can select a program to be recorded, which is received 31 and processed by the PVR 26. Following selection of a particular program for recording, in this embodiment the PVR 26 automatically generates a list of all the registered users, USER₂ ... USERₙ, and provides USER₁ an option to select 33 any number of other users designated to view the selected program.

In the case of parental control applications of the invention, USER₁ is typically the parent or other supervisor, and the other users are the supervised users, and the designation functions as a permission from the parent, or supervisor, for the child to view the particular program. In other applications of the invention, USER₁ may wish to suggest, rather than permit, other users to watch the program, for example a husband may wish his son to see a sports program on the list of recorded programs when he logs in, but does not want to suggest such programs to other users. In the application where parental permission is not needed, the designation functions as a suggestion rather than a permission. In either case, the selected program appears in a listing of recorded programs available to the designated user.

The PVR 26 of the invention can have a group identification for each user, for example Sam and Aviva may be grouped under Parents and under Adults, Margalita, Noah, Natalie and Racheli may be grouped as teenagers, and Shoshana may be grouped under Child. Sam may be designated as supervisor, in which case Sam is the only one who can make group assignments. When the list of other users is generated 32, the list preferably contains the populated groups, i. e., parents, adults, teenagers, children, and/or whole family in this example, in which case USER₁ can select a group instead of each individual in that group.

After the program selection for recording and designated users are received by the PVR 26 and recorded, USER₁ logs out 36 or is automatically logged out by the PVR 26 after a timeout period. After a period of time 37, another user turns on the television, USER₂ in this example, logs in under that user identity at the login menu 38, and upon receipt 39 and processing of the correct password, a list of stored programs which includes programs recorded by USER₂ as well as all stored programs having USER₂ designations entered by other users is generated 40 and presented on display 26. Using the remote control 12, USER₂ may then select 41 one of the programs from the USER₂ list to view or play, and the PVR 26 then accepts the selection and plays back 42 the permitted selection, completing the process 43.

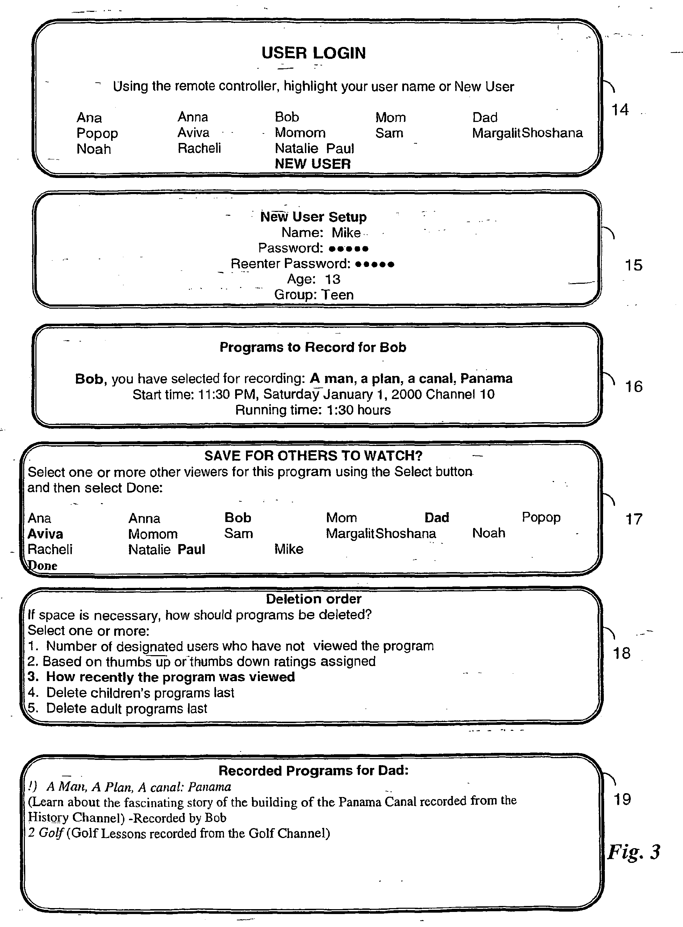

Referring now to FIG. 3, an embodiment of a user login screen 14 generated by the PVR GUI generation system is illustrated. At this screen USER₁ in this example either selects an existing user name from the list or selects NEW USER to start the New User Setup routine. Selecting a New User Setup routine results in the display of illustrated GUI screen 15. After successful login, a conventional EPG selection routine may be presented to allow the user to select programs to record. A user-customized Programs to Record GUI screen 16 may be selected by the user, wherein such a screen may say, for example, "Programs to Record for Bob" and list the currently selected programs that are scheduled to be recorded for this user identity. PVR 26 also provides, either automatically or by user selection, a GUI screen 17 that allows the user to designate other users for viewing the selected program. A GUI screen for such a function is shown in GUI 17, which indicates SAVE FOR OTHERS TO WATCH? followed by a list of user identities recognized by PVR 26, and allows USER₁ (Bob) to designate one or more other users, or groups of users such as Whole Family or Adults.

In accordance with the present invention, each user is also able to--call up a screen that shows the programs recorded for his or her user identity, as well as programs that have been recommended for his or her user identity by other users. For example, screen 19, shows that the identity Dad has recorded a certain Golf program and a program entitled A man, a Plan, a Canal, Panama, which was recorded by Bob and designated Dad.

A status symbol (not shown) may also be displayed next to each program in list 19 indicating whether the program is not watched, partially watched, or watched. If the user has designated a particular program to be watched by others, a viewed status symbol may also indicate whether the designated viewers have viewed the program, or the extent to which the program has been viewed. Ratings of the program by viewers that have already watched the program can also be displayed. The order of presentation of the stored programs can be customized at setup time, for example to first list the programs that have already been watched by other household viewers. The PVR 26 also can provide a master list of all stored programs. If a program being watched is not completely watched, the PVR 26 stores the current position in the program, and marks the status as partially watched. After a program is completely watched, the PVR 26 automatically marks that program as having been watched by the current viewer. (However, this can be manually overridden.) The viewer can also be prompted to rate the program (thumbs up/thumbs down, or a numerical rating). When the last of the intended viewers has completely watched a program, the PVR 26 will prompt the viewer to delete the program, or to mark it for archiving.

When the PVR 26 is scheduled to record new programs, but not enough storage space exists, currently stored programs are deleted to free the space to record the new programs. The order in which programs are chosen for deleting can be based on more information than the recording date, such as is done by currently available PVRs. Deletion order can be based on the number of intended viewers who have not watched a program, for example a program that has 3 viewers remaining to watch it would be deleted after a program with only 2 viewers remaining to watch. Deletion order can also be based on how recently a program was watched by any viewers, for example a program that was last watched a month ago is deleted before one watched yesterday. Deletion order can also be based on priority of the intended viewers, for example the kids' programs are deleted before the parents'. Deletion order can also be based on the rating's assigned to a program by some of the viewers. In general a hierarchical decision tree on deletion order is possible based on the time of the recording, most recent viewing of a program, number of remaining viewers for the program, ratings or the program, and viewer priority.

Thus, in accordance with the present invention, a Deletion Order screen 18 may be generated to allow customized deletion order when the storage system is full and there is insufficient storage space to record a new program. The present invention allows the user to designate a hierarchy for deciding which programs are to be deleted, wherein the illustrated possible selections are: 1. number of designated users who have not viewed the program; 2. the thumbs up or thumbs down ratings assigned by those who have viewed the program; 3. how recently the program was viewed; and 4. Deleting programs in certain programming categories first, for example, children's programs last in the deletion order, or deleting adult programs last. The order of the hierarchy may be selected by the user (not shown) such that in the event that the first item is the same, i.e., the number of designated viewers who have viewed the program are the same, the next factor is considered.

Parental controls can be supported by optionally requiring each user to enter a password in order to login as a specific viewer, in order to be allowed to watch programs intended for that viewer. This allows different levels of control for different family members, i.e. to teenagers are allowed to watch programs that younger children are not allowed to watch, but there are some programs stored on the PVR that the teenagers are not allowed to watch.

The steps described above may be implemented using software and programming techniques known to those skilled in the art.

Numerous modifications to and alternative embodiments of the present invention will be apparent to those skilled in the art in view of the foregoing description. Accordingly, this description is to be construed as illustrative only and is for the purpose of teaching those skilled in the art the best mode of carrying out the invention.

## Claims

1. A video recording system comprising:
a) a storage space (20);
b) means (20) for storing the identifications of a plurality of users;
c) means (12) for logging in a user;
d) means (13) for generating an on screen display (OSD) for allowing a logged in user to select a television program for recording in the storage space; and
e) means (20, 21, 22) for recording the selected television program in the storage space ;
the generating means (13) generating a list of recorded programs available for viewing associated with the logged in user, **characterized in that** the on screen display allows a particular user to designate television programs for viewing by another user, the recording means (20, 21, 22) recording the designated television programs, and the generating means lists uniquely for the logged in user both the recorded programs selected by the logged in user and programs designated, by any other users, for viewing by the logged in user.

2. The system of claim 1, wherein the means (20) for storing the identifications comprises means to store user names and passwords.

3. The system of claim 1 or 2, further comprising means (20) to store data indicative of the users that have viewed a recorded television program, and the portion of the recorded television program viewed by a user if the program has been partially viewed.

4. The system of claim 1, 2 or 3, further comprising means (20, 21) to delete recorded programs from the storage space according to a default deletion order or a user selected deletion order when the storage space is insufficient to record a scheduled program.

5. The system of claim 4, wherein the default or user selected deletion order is based a selected hierarchy based on
a) the number of users which have not viewed the stored program; how recently the recorded program was viewed by any user;
b) a category of user selected from children, teenagers, parents, and/or owner; or
c) a thumbs up or thumbs down rating assigned to a program after viewing by a user.

6. The system of any preceding claims wherein the storage space is one of a hard disk, optical media, and solid state memory.

7. The system of claim 1, further comprising
g) means for a logged in user to view a television program or to view a portion of a television program stored in the storage space; and
h) means to store data regarding each user which has viewed or partially viewed each stored television program, and the portion of the program viewed by a user in the event of a partially viewed the program.

8. The system of claim 7, further comprising means (25) for presenting information in the GUI as to which users have viewed or partially viewed each stored program.

9. The system of claim 8, wherein the means (20) for storing the identifications comprises means to store user names and passwords.

10. A method of controlling the operation of a television recording and playback system used by a plurality of users comprising the steps of:
a) logging (29) in a first user of a plurality of users;
b) receiving (31) from the first user a selection of a television program to be recorded;
c) recording the television program selected by the first user; and
d) displaying (19) a list of recorded programs which includes programs selected for recording by the first user, which list is uniquely associated with the first user, **characterized in that** it comprises by the further steps of :
e) receiving (32) from a second user a selection of a second television program for viewing by the first user;
f) recording the second television program; and
g) displaying in the list of recorded programs (19) both programs selected by the first user and programs designated, by the second user, for viewing by the first user.

11. The method of claim 10, further including the step of identifying (32) a plurality of individual users and groups to which each identified individual user belongs.

12. The method of claim 10 or 11, further comprising the step of requiring (29) a password when logging in a user.

13. The method of any claims 10 to 12, further comprising the step of deleting recorded programs when storage space is required to record scheduled programs according to either a default protocol or a user selected protocol (18).

14. The method of any claims 10 to 13, further comprising the step of, when storage space is required to record scheduled programs, deleting recorded programs according to a default or a user selected deletion protocol (18) based on one or more of : a) the number of permitted users which have not viewed the stored program;
b) how recently the recorded program was viewed by any permitted user;
c) the category of permitted user(s) which have not completed watching the recorded program; and
d) any thumbs up or thumbs down ratings assigned to a stored program after viewing by permitted users.

15. The method of any claims 10 to 14, further comprising the step of assigning a user to a group and accepting permissions according to groups and/or individuals.

## Patentansprüche

1. Videoaufzeichnungssystem, das enthält:
a) einen Speicherbereich (20);
b) Mittel(20) zur Speicherung der Erkennungsmerkmale einer Mehrzahl von Benutzern;
c) Mittel(12) zum Anmelden eines Benutzers;
d) Mittel(13) zum Erzeugen einer Bildschirmanzeige (OSD), um es einem angemeldeten Benutzer zu ermöglichen, ein Fernsehprogramm zum Aufzeichnen in dem Speicherbereich auszuwählen: und
e) Mittel (20, 21, 22) zum Aufzeichnen des ausgewählten Fernsehprogramms in dem Speicherbereich;
wobei die erzeugenden Mittel(13) zur Erstellung einer Liste der aufgezeichneten zum Ansehen verfügbaren Programme, die dem angemeldeten Benutzer zugeordnet sind, **dadurch gekennzeichnet sind, dass** es die Bildschirmanzeige einem bestimmten Benutzer ermöglicht, Fernsehprogramme zur Ansicht durch einen anderen Benutzer zu benennen, wobei die Mittel zum Aufzeichnen (20, 21, 22), welche die benannten Fernsehprogramme aufzeichnen, und wobei die erzeugenden Mittel allein für den angemeldeten Benutzer sowohl die von dem angemeldeten Benutzer ausgewählten aufgezeichneten Programme als auch Programme auflisten, die von irgendwelchen anderen Benutzern zum Ansehen durch den angemeldeten Benutzer bestimmt wurden.

2. System nach Anspruch 1, wobei die Mittel (20) zum Speichern der Erkennungsmerkmale Mittel umfassen, um Benutzernamen und Passwörter zu speichern.

3. System nach Anspruch 1 oder 2 umfasst außerdem Mittel (20), um benutzerbezogene Daten zu speichern, die anzeigen, dass die Benutzer ein aufgezeichnetes Fernsehprogramm angesehen haben, und den Abschnitt des aufgezeichneten Fernsehprogramms, den ein Benutzer angesehen hat, falls das Programm teilweise angesehen wurde.

4. System nach Anspruch 1, 2, oder 3 umfasst weiter Mittel (20, 21) zum Löschen aufgezeichneter Programme aus dem Speicherbereich mit einem Standardlöschbefehl oder mit einem von dem Benutzer ausgewählten Löschbefehl, wenn der Speicherplatz zur Aufzeichnung eines geplanten Programms nicht ausreicht.

5. System nach Anspruch 4, wobei der Standard- oder Benutzerlöschbefehl auf einer ausgewählten Hierarchie beruht, auf der Grundlage
a) der Anzahl der Benutzer, die das gespeicherte Programm nicht angesehen haben; vor welcher Zeit wurde das Programm durch jeden Benutzer angesehen;
b) einer Kategorie der Benutzer nach Kindern, Teenagern, Eltern und/oder Besitzern; oder
c) einer positiven oder negativen Programmbewertung nach dem Ansehen des Programms durch einen Benutzer.

6. System nach jedem der vorhergehenden Ansprüche, wobei der Speicherbereich eine Festplatte, optische Medien oder ein Halbleiterspeicher ist.

7. System nach Anspruch 1, das weiterhin umfasst
g) Mittel für einen angemeldeten Benutzer, um ein Fernsehprogramm anzusehen, oder einen Ausschnitt eines Fernsehprogramms anzusehen, das im Speicherbereich gespeichert wurde; und
h) Mittel, um Daten bezogen auf jeden Benutzer zu speichern, der ganz oder teilweise jedes gespeicherte Fernsehprogramm angesehen hat, sowie den angesehenen Abschnitt des Programms, das der Benutzer angesehen hat, für den Fall der teilweisen Ansicht des Programms.

8. System nach Anspruch 7, das weiter Mittel (25) zur Darstellung von Information in dem GUI umfasst, wie weit Benutzer ganz oder teilweise jedes gespeicherte Programm angesehen haben.

9. System nach Anspruch 8, wobei die Mittel (20) zur Speicherung der Kenndaten Mittel umfassen, um Benutzernamen und Passwörter zu speichern.

10. Verfahren der Steuerung des Betriebs eines Fernseh-Aufzeichnungs- und Wiedergabesystems, das durch eine Mehrzahl von Benutzern benutzt wird, und folgende Schritte umfasst:
a) Anmelden (29) eines ersten Benutzers aus einer Mehrzahl von Benutzern;
b) von dem ersten Benutzer eine Auswahl eines Fernsehprogramms empfangen (31), das aufgezeichnet werden soll;
c) Aufzeichnen des von dem Benutzer ausgewählten Fernsehprogramms; und
d) Anzeigen (19) einer Liste von aufgezeichneten Programmen, welche die vom ersten Benutzer gewählten Programme einschließt, und diese Liste ist ausschließlich dem ersten Benutzer zugeordnet, **dadurch gekennzeichnet, dass** sie folgende Schritte umfasst:
e) von einem zweiten Benutzer eine Auswahl eines zweiten Fernsehprogramms empfangen (32), um es durch den ersten Benutzer anzusehen;
f) Aufzeichnen des zweiten Fernsehprogramms; und
g) Anzeigen in der Liste aufgezeichneter Programme (19) sowohl der von dem ersten Benutzer ausgewählten Programme als auch der Programme, die durch den zweiten Benutzer zum Ansehen durch den ersten Benutzer bestimmt wurden.

11. Verfahren nach Anspruch 10, das außerdem den Schritt der Identifizierung (32) einer Vielzahl einzelner Benutzer und Gruppen umfaßt, zu der jeder identifizierte einzelne Benutzer gehört.

12. Verfahren nach Anspruch 10 oder 11, das außerdem den Schritt der Anforderung eines Passwortes beim Einloggen eines Benutzers umfasst.

13. Verfahren nach einem der Ansprüche 10 bis 12, das weiterhin den Schritt des Löschens aufgezeichneter Programme umfaßt, wenn Speicherplatz benötigt wird, um geplante Programme entweder entsprechend einem Standardprotokoll oder einem vom Benutzer gewählten Protokoll (18) aufzuzeichnen.

14. Das Verfahren nach einem der Ansprüche 10 bis 13, das weiterhin den Schritt des Löschens aufgezeichneter Programme umfasst, wenn Speicherplatz benötigt wird, um geplante Programme entweder entsprechend einem Standardlöschprotokoll oder einem vom Benutzer gewählten Löschprotokoll (18) aufzuzeichnen, auf der Basis eines oder mehrerer der folgenden Kriterien:
a) Anzahl der zugelassenen Benutzer, die das gespeicherte Programm nicht angesehen haben;
b) letzter Zeitpunkt, zu dem das aufgezeichnete Programm von einem beliebigen zugelassenen Benutzer angesehen wurde;
c) Kategorie des/der zugelassenen Benutzer(s), die das aufgezeichnete Programm nicht zu Ende angesehen hat/haben; und
d) die einem gespeicherten Programm von zugelassenen Benutzern, die das Programm angesehen haben, zugewiesenen Bewertungen Daumen nach oben/Daumen nach unten.

15. Das Verfahren nach einem der Ansprüche 10 bis 14, das weiterhin den Schritt des Zuordnens eines Benutzers zu einer Gruppe und des Annehmens von Erlaubnissen.

## Revendications

1. Un système d'enregistrement vidéo comprend :
a) un espace de stockage (20) ;
b) un moyen (20) permettant de stocker les identifications de plusieurs utilisateurs ;
c) un moyen (12) permettant de se connecter à un utilisateur ;
d) un générateur (13) d'affichage à l'écran (OSD) permettant à un utilisateur connecté de sélectionner un programme télévisé pour l'enregistrer dans l'espace de stockage ; et
e) un moyen (20, 21, 22) permettant d'enregistrer le programme télévisé sélectionné dans l'espace de stockage ;
le générateur (13) générant une liste des programmes enregistrés disponibles pour être visualisés par l'utilisateur connecté associé, **caractérisé en ce que** l'affichage à l'écran permet à un utilisateur particulier de désigner des programmes télévisés pour qu'ils soient visualisés par un autre utilisateur, le moyen d'enregistrement (20, 21, 22) enregistrant les programmes télévisés désignés, et le générateur créant une liste, destinée uniquement à l'utilisateur connecté, contenant les programmes enregistrés sélectionnés par l'utilisateur connecté ainsi que les programmes désignés par tout autre utilisateur en vue d'une visualisation par l'utilisateur connecté.

2. Le système de la revendication 1, où le moyen (20) permettant de stocker les identifications comprend un dispositif de stockage des noms d'utilisateur et des mots de passe.

3. Le système de la revendication 1 ou 2 comprend également un moyen (20) permettant de stocker les données des utilisateurs ayant visualisé un programme télévisé enregistré ainsi que la portion du programme télévisé enregistré visualisée par un utilisateur si le programme n'a été regardé que partiellement.

4. Le système de la revendication 1, 2 ou 3 comprend également un moyen (20, 21) permettant de supprimer des programmes enregistrés de l'espace de stockage, selon un ordre de suppression configuré par défaut ou sélectionné par l'utilisateur, lorsque l'espace de stockage est insuffisant pour enregistrer un programme planifié.

5. Le système de la revendication 4, où l'ordre de suppression par défaut ou sélectionné par l'utilisateur est basé sur une hiérarchie basée sur
a) le nombre d'utilisateurs n'ayant pas visualisé le programme stocké ; la date de visualisation du programme enregistré ;
b) une catégorie d'utilisateurs sélectionnée parmi les enfants, les adolescents, les parents et/ou le propriétaire ; ou
c) une indication « pouces tournés vers le haut » ou « pouces tournés vers le bas » attribuée à un programme après sa visualisation par un utilisateur.

6. Le système de l'une des revendications précédentes où l'espace de stockage est un disque dur, un support optique, et une mémoire d'état performante.

7. Le système de la revendication 1, comprenant également
g) un moyen permettant à l'utilisateur connecté de visualiser un programme télévisé ou une portion d'un programme télévisé stockée dans l'espace de stockage ; et
h) un moyen permettant de stocker les données concernant tous les utilisateurs ayant visualisé entièrement ou partiellement chaque programme télévisé stocké et concernant la portion de programme visualisée par un utilisateur dans le cas d'une visualisation partielle.

8. Le système de la revendication 7 comprenant également un moyen (25) permettant d'afficher dans le GUI les informations distinguant les utilisateurs ayant visualisé tous les programmes stockés de ceux ne les ayant visualisés que partiellement.

9. Le système de la revendication 8, où le moyen (20) permettant de stocker les identifications comprend un moyen pour stocker les noms d'utilisateur ainsi que les mots de passe.

10. Un procédé de contrôle du fonctionnement du système de lecture et d'enregistrement de télévision utilisé par plusieurs utilisateurs comprenant les étapes suivantes :
a) connexion (29) à un premier utilisateur parmi une pluralité d'utilisateurs ;
b) réception (31) d'une sélection, effectuée par le premier utilisateur, d'un programme télévisé à enregistrer ;
c) enregistrement du programme télévisé sélectionné par le premier utilisateur ;
d) affichage (19) d'une liste de programmes enregistrés contenant les programmes sélectionnés par le premier utilisateur pour l'enregistrement, laquelle liste est uniquement associée au premier utilisateur, **caractérisé en ce qu'**il se compose des étapes suivantes :
e) réception (32) d'une sélection d'un deuxième programme télévisé effectuée par le premier utilisateur en vue de sa visualisation par le premier utilisateur ;
f) enregistrement du deuxième programme télévisé ; et
g) affichage des programmes sélectionnés par le premier utilisateur et des programmes désignés par le deuxième utilisateur pour une visualisation par le premier utilisateur dans la liste des programmes enregistrés (19).

11. Le procédé de la revendication 10 comprenant également l'étape d'identification (32) de chacun des utilisateurs potentiels ainsi que des groupes auxquels chacun des utilisateurs identifiés appartient.

12. Le procédé de la revendication 10 ou 11 comprenant également l'étape de demande (29) d'un mot de passe lors de la connexion à un utilisateur.

13. Le procédé de l'une des revendications 10 à 12 comprenant également l'étape de suppression des programmes enregistrés lorsque de l'espace de stockage est nécessaire pour enregistrer des programmes planifiés, selon un protocole par défaut ou un protocole sélectionné par un utilisateur (18).

14. Le procédé de l'une des revendications 10 à 13 comprenant également l'étape consistant, lorsque de l'espace de stockage est nécessaire pour enregistrer les programmes planifiés, à supprimer des programmes enregistrés selon un protocole de suppression par défaut ou sélectionné par l'utilisateur (18) basé sur un ou plusieurs des éléments suivants :
a) le nombre d'utilisateurs autorisés n'ayant pas regardé le programme stocké ;
b) la date à laquelle le programme enregistré a été visualisé par un utilisateur autorisé ;
c) la catégorie de ou des utilisateur(s) autorisé(s) n'ayant pas terminé de regardé le programme enregistré ; et
d) les indications « pouces tournés vers le haut » ou « pouces tournés vers le bas » attribuées à un programme enregistré après sa visualisation par des utilisateurs autorisés.

15. Le procédé de l'une des revendications 10 à 14 comprenant également l'étape consistant à affecter un utilisateur à un groupe et à accepter les autorisations en fonction des groupes et/ou des personnes.
